# EUROPÄISCHE PATENTSCHRIFT

(11) **EP 2 354 012 B1**
(45) Veröffentlichungstag und Bekanntmachung des Hinweises auf die Patenterteilung: **16.01.2013**
(21) Anmeldenummer: 10015039.0
(22) Anmeldetag: 26.11.2010
(51) Int. Cl.: B65B 5/12, B65B 35/36, B65B 57/14, B25J 9/00

(54) **Vorrichtung und Verfahren zum Erstellen von Produktportionen**
Method and device for implementing product portions
Machine et procédé pour réaliser des portions de produits

(30) Priorität: 22.12.2009 DE 102009060064
(43) Veröffentlichungstag der Anmeldung: 10.08.2011
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-B1- 1 819 994
- US-A- 6 122 895
- US-B1- 6 374 984

## Beschreibung

Die vorliegende Erfindung betrifft eine Vorrichtung zum Erstellen von Portionen aus mittels eines Produktförderers geförderten Produkten, wobei die Vorrichtung mehrere Roboter umfasst, die jeweils einen Arbeitsbereich definieren. Die Erfindung betrifft ferner ein Verfahren zum Erstellen von Portionen aus mittels eines Produktförderers geförderten Produkten.

Vorrichtungen der genannten Art kommen beispielsweise in der Lebensmittelindustrie zum Einsatz, um Lebensmittelprodukte, wie einzelne Scheiben oder Stücke von Fleisch, Wurst oder Käse, von einem Produktförderer aufzunehmen, umzusetzen und an einem Ablageort zu Produktportionen zusammenzusetzen. Die Roboter können als sogenannte "Pick & Place"-Roboter ausgebildet sein und zum Beispiel dazu vorgesehen sein, Produkte von einem Ausgangsförderer einer Schneidvorrichtung auf eine Produktablage einer Verpackungsmaschine umzusetzen, um dort verkaufsfertige Portionen zu erstellen.

Das Vorsehen von zwei oder mehr parallel arbeitenden Umsetzrobotern erhöht die Gesamtgeschwindigkeit des Umsetzens und ermöglicht einen Betrieb des Produktförderers mit vergleichsweise hoher Fördergeschwindigkeit. Bei den am Ablageort zu erstellenden Produktportionen müssen üblicherweise bestimmte Vorgaben hinsichtlich der Produkt- und/oder Portionseigenschaften eingehalten werden. Beispielsweise kann es gewünscht sein, stets Produkte mit etwa gleichen Abmessungen zu einer Portion zusammenzufassen, und/oder die Portion soll ein vorbestimmtes Portionsgewicht erhalten. Bei bestimmten Produktarten, wie z.B. Frischfleisch, können die einzelnen Produkte hinsichtlich des Gewichts oder der Abmessungen jedoch relativ stark voneinander abweichen, sodass es für die Roboter schwierig ist, die entsprechenden Vorgaben für die Portionen zu erfüllen.

Ein erster Roboter kann dazu dienen, die geförderten Produkte gemäß einem Sortierkriterium zu sortieren und wenigstens ein zweiter Roboter kann dazu dienen, sortierte Produkte von dem Produktförderer aufzunehmen und an einem Ablageort abzulegen, um eine ein Zielkriterium erfüllende Produktportion an dem Ablageort zu erstellen.

In der US 6 374 984 B 1 ist ein Verfahren zum automatisierten Gruppieren von geförderten Objekten offenbart.

Die EP 1 819 994 B 1 offenbart eine Vorrichtung zum Gruppieren von geförderten Lebensmittelprodukten, wobei die einzelnen Produkte mittels mehrerer Roboter von einem Eingangsförderer aufgenommen und jeweils auf einem von mehreren Ausgangsförderern zu Gruppen zusammengestellt werden.

Es ist eine Aufgabe der Erfindung, mit möglichst geringem Aufwand das Erstellen von Produktportionen aus geförderten Produkten zu verbessern.

Die Aufgabe wird durch eine Vorrichtung mit den Merkmalen des Anspruchs 1 gelöst.

Erfindungsgemäß umfasst der Produktförderer eine erste und mindestens eine zweite Fördereinrichtung, die sich in Förderrichtung parallel zueinander durch die Arbeitsbereiche der Roboter erstrecken. Bei den Fördereinrichtungen kann es sich z.B. um parallel verlaufende Bandförderer handeln. Die erste Fördereinrichtung führt vorzugsweise von der zugehörigen Bearbeitungsmaschine durch die Arbeitsbereiche aller Roboter hindurch, während die zweite Fördereinrichtung und gegebenenfalls alle weiteren Fördereinrichtungen von dem Arbeitsbereich des ersten Roboters durch den Arbeitsbereich jedes weiteren Roboters hindurchführen. Der zum Sortieren vorgesehene Roboter kann die Produkte dann entsprechend dem Sortierkriterium auf die beiden parallelen Fördereinrichtungen verteilen, sodass die gemäß dem gewünschten Sortierkriterium unterschiedenen Produkte räumlich voneinander getrennt sind. Die Fördereinrichtungen wirken außerdem als Puffer und können somit dazu beitragen, einen möglichen ungleichmäßigen Produktfluss aus einer Produktverarbeitungsmaschine, z.B. einer Schneidvorrichtung, zu kompensieren.

Erfindungsgemäß dient der erste Roboter dazu, die von der ersten Fördereinrichtung geförderten Produkte in Abhängigkeit von dem Sortierkriterium auf die zweite Fördereinrichtung umzusetzen oder auf der ersten Fördereinrichtung zu belassen. Beispielsweise kann der erste Roboter derart betrieben werden, dass untergewichtige Produkte auf der ersten Fördereinrichtung verbleiben, während übergewichtige Produkte auf die zweite Fördereinrichtung gelegt und parallel zu der ersten Fördereinrichtung durch die Arbeitsbereiche aller weiteren Roboter transportiert werden.

Der Erfindung liegt mit anderen Worten also der allgemeine Gedanke zugrunde, die geförderten Produkte vor der eigentlichen Portionserstellung zunächst zu sortieren. Zu diesem Zweck wird einer der vorhandenen Roboter - vorzugsweise ausschließlich - zur Durchführung eines Sortiervorgangs eingesetzt. Dieser Roboter wird im folgenden auch als Sortierroboter bezeichnet. Der zweite bzw. jeder weitere Roboter dient dagegen in gewohnter Weise zum Umsetzen der Produkte und zum Erstellen von Produktportionen und wird somit auch als Portionierroboter bezeichnet. Der Portionierroboter kann aus den vorsortierten Produkten eine optimierte Auswahl treffen, um so das Zielkriterium, z.B. ein vorgegebenes Portionsgewicht, für die zu erstellende Portion zu erfüllen.

Der zweite Roboter folgt vorzugsweise in Förderrichtung gesehen auf den ersten Roboter, bzw. mehrere zweite Roboter können nacheinander in Förderrichtung gesehen auf den ersten Roboter folgen. Der erste Roboter einer Reihe von in Förderrichtung angeordneten Robotern arbeitet also als Sortierroboter, damit jeder weitere Roboter (Portionierroboter) auf bereits sortierte Produkte zugreifen kann.

Der erste Roboter ist vorzugsweise dazu ausgebildet, die Produkte derart zu sortieren, dass die zweite Fördereinrichtung nach dem Sortieren etwa gleich viele Produkte pro Zeiteinheit fördert wie die erste Fördereinrichtung. Dies ist im Sinne eines effizienten Betriebs vorteilhaft, da die Förder- und Umsetzkapazitäten optimal ausgeschöpft werden.

Gemäß einer weiteren Ausführungsform ist der wenigstens eine zweite Roboter dazu ausgebildet, die sortierten Produkte in Abhängigkeit von dem Zielkriterium von der ersten Fördereinrichtung oder von der zweiten Fördereinrichtung aufzunehmen. Das Umsetzen der Produkte unter Beachtung des Zielkriteriums kann auf diese Weise besonders schnell erfolgen, da der zweite Roboter praktisch gleichzeitigen Zugriff auf Produkte unterschiedlicher Kategorie hat und somit ein Produkt der gewünschten Kategorie im Wesentlichen ohne Wartezeit aufnehmen kann.

Wie vorstehend erwähnt kann das Sortierkriterium das Über- oder Unterschreiten eines vorbestimmten Produktgewichts, z.B. eines mittleren Produktgewichts, umfassen. Alternativ oder zusätzlich können andere Kriterien berücksichtigt werden, wie z.B. die Produktgröße oder die Produktform. Das Sortierkriterium kann auch dynamisch sein, d.h. also während des Betriebs der Vorrichtung variieren. Beispielsweise kann das Sortierkriterium in Abhängigkeit von der Anzahl der durch die jeweiligen Fördereinrichtungen geförderten Produkte und/ oder in Abhängigkeit von z.B. dem erreichten mittleren Gewicht der erstellten Produktportionen variieren und somit die Anzahl der auf die jeweiligen Fördereinrichtungen des Produktförderers zu legenden Produkte beeinflussen.

Das Zielkriterium kann beispielsweise ein vorbestimmtes Sollgewicht der zu erstellenden Produktportion umfassen. Das zumindest annähernde Einhalten eines vorbestimmten Sollgewichts der Produktportionen ist im Bereich der Lebensmittelindustrie ein wichtiger Aspekt, da zum einen der Endkunde gewichtskonstante Portionen gewöhnt ist und zum anderen diese mit einem einheitlichen Verkaufspreis versehen werden können. Selbstverständlich ist bei der Einhaltung des Sollgewichts eine gewisse Toleranz zugelassen, die je nach Anwendung unterschiedlich groß ausfallen kann.

Gemäß einer weiteren Ausführungsform ist eine Verpackungsmaschine im Arbeitsbereich des wenigstens einen zweiten Roboters (Portionierroboters) angeordnet, in welcher die Produktportionen erstellt werden. Die Verpackungsmaschine kann eine Produktauflage umfassen, auf welcher gemäß einem Formatsatz an mehreren unterschiedlichen Ablageorten Portionen erstellt werden, welche anschließend verpackt und gegebenenfalls weitertransportiert werden.

Die Erfindung betrifft ferner ein Verfahren zum Erstellen von Portionen aus mittels eines Produktförderers geförderten Produkten, insbesondere Lebensmittelprodukten. Erfindungsgemäß werden die geförderten Produkte mittels eines ersten Roboters gemäß einem Sortierkriterium sortiert, und sortierte Produkte werden mittels wenigstens eines zweiten Roboters von dem Produktförderer aufgenommen und an einem Ablageort abgelegt, um eine ein Zielkriterium erfüllende Produktportion an dem Ablageort zu erstellen. Ein derartiges Verfahren lässt sich mit Hilfe der voranstehend erläuterten Vorrichtung durchführen, weshalb die voranstehend erwähnten Vorteile entsprechend gelten.

Weitere vorteilhafte Ausbildungen der Erfindung sind den Unteransprüchen, der Beschreibung und der Zeichnung zu entnehmen.

Die Erfindung wird im Folgenden rein beispielhaft anhand einer möglichen Ausführungsform unter Bezugnahme auf die beigefügte Zeichnung beschrieben.

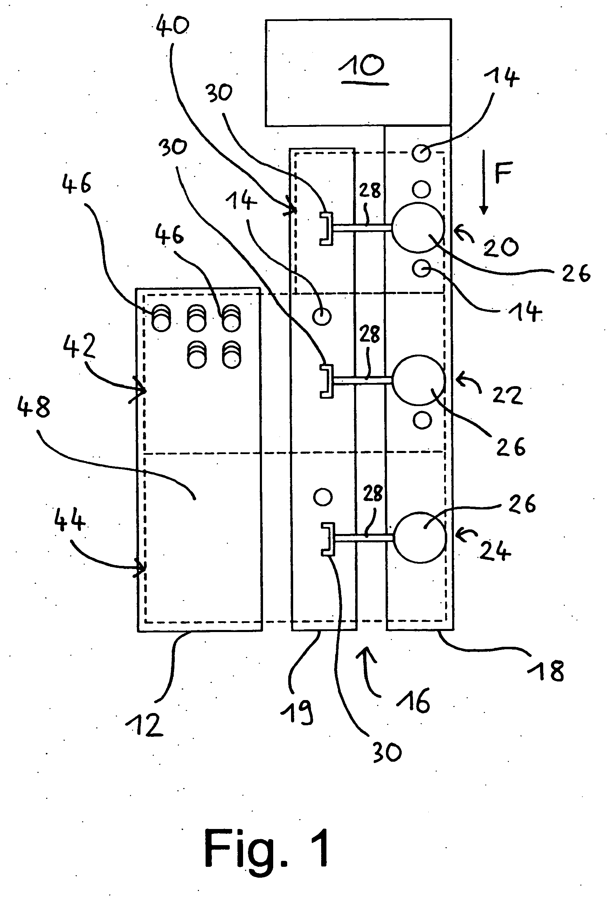

- Fig. 1: zeigt eine vereinfachte Draufsicht auf eine erfindungsgemäße Vorrichtung zum Erstellen von Lebensmittelproduktportionen, welche eine Anordnung aus drei Robotern umfasst.

In Fig. 1 ist eine Produktionslinie mit einer Schneidvorrichtung 10 zum Aufschneiden eines Lebensmittelproduktlaibes, wie z.B. eines Wurst-, Fleisch- oder Käselaibes, und mit einer der Schneidvorrichtung 10 nachgeordneten Verpackungsmaschine 12 zur Erstellung verkaufsfertiger Portionspackungen dargestellt. Die durch die Schneidvorrichtung 10 von dem Produktlaib abgetrennten Produkte 14, z.B. Scheiben oder Stücke, werden von einem Produktförderer 16 entlang einer Förderrichtung F transportiert. Der Produktförderer 16 umfasst mehrere parallele Fördereinrichtungen, im dargestellten Beispiel einen ersten Bandförderer 18 und einen zweiten Bandförderer 19. Die abgetrennten Produkte 14 werden zunächst auf dem ersten Bandförderer 18 transportiert, welcher direkt an die Schneidvorrichtung 10 angegliedert ist.

Eine Anordnung aus einem ersten Roboter 20, einem zweiten Roboter 22 und einem dritten Roboter 24 ist in der Umgebung des Produktförderers 16 angeordnet und dient dazu, die geförderten Produkte 14 in die Verpackungsmaschine 12 einzulegen.

Die Roboter 20, 22, 24 sind im vorliegenden Ausführungsbeispiel als Parallelroboter mit Delta-Kinematik ausgebildet und umfassen jeweils eine Basis 26, eine beweglich an dieser angebrachte Kinematik 28 sowie einen an die Kinematik 28 angekoppelten Endeffektor 30. Bei dem Endeffektor 30 kann es sich um ein beliebiges Werkzeug handeln, mittels welchem die Produkte 14 aufgenommen, transportiert und abgesetzt werden können. Beispielsweise sind Systeme mit zwei die Produkte 14 untergreifenden Schaufelblättern oder mit einer Vakuumsaugvorrichtung bekannt.

Den Robotern 20, 22, 24 ist jeweils ein Arbeitsbereich 40, 42, 44 zugeordnet, in welchem während des normalen Umsetzbetriebs Produkte 14 aufgenommen und abgesetzt werden. Die Arbeitsbereiche 40, 42, 44 der Roboter 20, 22, 24 werden auch als "Roboterzellen" bezeichnet. Sowohl der erste Bandförderer 18 als auch der zweite Bandförderer 19 führen durch alle Roboterzellen 40, 42, 44 hindurch.

Der erste Roboter 20 - im Folgenden auch als "Sortierroboter" bezeichnet - dient dazu, die von dem Produktförderer 16 geförderten Produkte 14 gemäß einem Sortierkriterium zu sortieren. Der zweite Roboter 22 und der dritte Roboter 24, welche in Förderrichtung F gesehen dem ersten Roboter 20 nachfolgen, dienen hingegen dem Erstellen von Produktportionen 46 aus den einzelnen Produkten 14, weshalb der zweite und der dritte Roboter 22, 24 im Folgenden auch "Portionierroboter" genannt werden. Die Anzahl der vorzusehenden Portionierroboter 22, 24 richtet sich im Wesentlichen nach der geforderten Produktumsetzleistung und ist hier lediglich beispielhaft auf zwei festgesetzt.

Der Sortierroboter 20 wird durch eine in Fig. 1 nicht dargestellte Steuereinrichtung derart angesteuert, dass er die von dem ersten Bandförderer 18 geförderten Produkte 14 in Abhängigkeit von dem Produktgewicht auf den zweiten Bandförderer 19 umsetzt oder auf dem ersten Bandförderer 18 belässt. Das Gewicht der einzelnen Produkte 14 kann im Vorfeld des Sortierens z.B. sensorisch erfasst oder berechnet und der Steuereinrichtung mitgeteilt werden.

Bei dem beschriebenen Ausführungsbeispiel werden Produkte 14, welche ein berechnetes oder vorgegebenes mittleres Produktgewicht unterschreiten, auf dem ersten Bandförderer 18 belassen. Produkte 14, welche das vorgegebene mittlere Produktgewicht überschreiten, werden dagegen von dem Sortierroboter 20 aufgenommen und auf dem zweiten Bandförderer 19 abgelegt.

Nach dem Sortiervorgang befinden sich also unterdurchschnittlich schwere Produkte 14 auf dem ersten Bandförderer 18, während sich überdurchschnittlich schwere Produkte 14 auf dem zweiten Bandförderer 19 befinden. Im Ergebnis wird durch den Produktförderer 16 ein Strom von sortierten Produkten 14 durch die Roboterzellen 42, 44 aller Portionierroboter 22, 24 gefördert. Dabei wird eine zumindest annähernde Gleichverteilung der Produkte 14 auf den beiden parallelen Bandförderern 18, 19 angestrebt, sodass also der zweite Bandförderer 19 nach dem Sortieren durch den Sortierroboter 20 etwa gleich viele Produkte 14 pro Zeiteinheit fördert wie der erste Bandförderer 18.

Unter Berücksichtigung eines Zielkriteriums nimmt jeder der beiden Portionierroboter 22, 24 Produkte 14 von dem ersten Bandförderer 18 und/oder dem zweiten Bandförderer 19 auf und legt diese an einem vorgegebenen Ablageort auf einer Produktauflage 48 der Verpackungsmaschine 12 ab, um so gewünschte Portionen 46 zu bilden.

Im vorliegenden Ausführungsbeispiel handelt es sich bei dem Zielkriterium um ein Sollgewicht der zu erstellenden Portion 46. Die Portionierroboter 22, 24 werden folglich derart betrieben, dass das jeweils als nächstes aufzunehmende Produkt 14 in Abhängigkeit von dem zur Erstellung einer Portion 46 noch benötigten Produktgewicht wahlweise von dem ersten Bandförderer 18 oder von dem zweiten Bandförderer 19 aufgenommen wird.

Beispielsweise kann es vorkommen, dass zur Vervollständigung einer Portion 46 noch ein überdurchschnittlich schweres Produkt 14 benötigt wird. Der entsprechende Portionierroboter 22, 24 greift in diesem Fall auf den zweiten Bandförderer 19 zu, da aufgrund des Sortierens bekannt ist, dass dieser übergewichtige Produkte 14 fördert. Ebenso kann es vorkommen, dass eine zu vervollständigende Portion 46 bereits eine oder mehrere übergewichtige Produkte 14 enthält, sodass zum Erreichen des Portionssollgewichts eher ein untergewichtiges Produkt 14 hinzuzufügen ist. Dieses kann dem ersten Bandförderer 18 entnommen werden.

Auf die beschriebene Weise ist es möglich, das Sollgewicht der verkaufsfertigen Portionen 46 relativ exakt einzuhalten. Die Effizienz der Gesamtanlage kann durch das Aufteilen des Portionserstellungsvorgangs in die einzelnen Arbeitsschritte "Sortieren" und "Zusammenstellen" im Vergleich zu einem Portionserstellen ohne Vorsortieren erhöht werden. Je nach Anwendungsvorgabe kann der Produktförderer 16 auch drei oder mehr parallel verlaufende Bandförderer umfassen, um so zusätzliche Sortiermöglichkeiten - wie z.B. die Möglichkeit einer feineren Gewichtsunterteilung - zu schaffen. Insgesamt wird durch das Transportieren von sortierten Produkten 14 auf mehreren parallel verlaufenden Bandförderern 18, 19 eine zusätzliche Pufferkapazität innerhalb der Roboterzellen 42, 44 geschaffen, was der Effizienz der Portionierroboter 22, 24 zu Gute kommt.

### Bezugszeichenliste

- 10: Schneidvorrichtung
- 12: Verpackungsmaschine
- 14: Produkt
- 16: Produktförderer
- 18: erster Bandförderer
- 19: zweiter Bandförderer
- 20: Sortierroboter
- 22: Portionierroboter
- 24: Portionierroboter
- 26: Basis
- 28: Kinematik
- 30: Endeffektor
- 40: erste Roboterzelle
- 42: zweite Roboterzelle
- 44: dritte Roboterzelle
- 46: Portion
- 48: Produktauflage

- F: Förderrichtung

## Patentansprüche

1. Vorrichtung zum Erstellen von Portionen (46) aus mittels eines Produktförderers (16) geförderten Produkten (14), insbesondere Lebensmittelprodukten, umfassend mehrere Roboter (20, 22, 24), die jeweils einen Arbeitsbereich (40, 42, 44) definieren, wobei ein erster Roboter (20) dazu dient, die geförderten Produkte (14) gemäß einem Sortierkriterium zu sortieren, und
wenigstens ein zweiter Roboter (22) dazu dient, sortierte Produkte (14) von dem Produktförderer (16) aufzunehmen und an einem Ablageort abzulegen, um eine ein Zielkriterium erfüllende Produktportion (46) an dem Ablageort zu erstellen,
dädurch **gekennzeichnet**, dass
der Produktförderer (16) eine erste und mindestens eine zweite Fördereinrichtung (18, 19) umfasst, die sich in Förderrichtung (F) parallel zueinander durch die Arbeitsbereiche (40, 42, 44) der Roboter (20, 22, 24) erstrecken, wobei
der erste Roboter (20) dazu dient, die von der ersten Fördereinrichtung (18) geförderten Produkte (14) in Abhängigkeit von dem Sortierkriterium auf die zweite Fördereinrichtung (19) umzusetzen oder auf der ersten Fördereinrichtung (18) zu belassen.

2. Vorrichtung nach Anspruch 1,
**dadurch gekennzeichnet, dass**
der zweite Roboter (22) in Förderrichtung (F) gesehen auf den ersten Roboter (20) folgt bzw. mehrere zweite Roboter (22, 24) nacheinander in Förderrichtung (F) gesehen auf den ersten Roboter (20) folgen.

3. Vorrichtung nach Anspruch 1 oder 2,
**dadurch gekennzeichnet, dass**
der erste Roboter (20) dazu ausgebildet ist, die Produkte (14) derart zu sortieren, dass die zweite Fördereinrichtung (19) nach dem Sortieren etwa gleich viele Produkte (14) pro Zeiteinheit fördert wie die erste Fördereinrichtung (18).

4. Vorrichtung nach einem der vorstehenden Ansprüche,
**dadurch gekennzeichnet, dass**
der wenigstens eine zweite Roboter (22) dazu ausgebildet ist, die sortierten Produkte (14) in Abhängigkeit von dem Zielkriterium von der ersten Fördereinrichtung (18) oder von der zweiten Fördereinrichtung (19) aufzunehmen.

5. Vorrichtung nach zumindest einem der vorstehenden Ansprüche, **dadurch gekennzeichnet, dass**
das Sortierkriterium das Über- oder Unterschreiten eines vorbestimmten Produktgewichts, z.B. eines mittleren Produktgewichts, umfasst.

6. Vorrichtung nach zumindest einem der vorstehenden Ansprüche,
**dadurch gekennzeichnet, dass**
das Zielkriterium ein vorbestimmtes Sollgewicht der zu erstellenden Produktportion (46) umfasst.

7. Vorrichtung nach zumindest einem der vorstehenden Ansprüche,
**dadurch gekennzeichnet, dass**
eine Verpackungsmaschine (12) im Arbeitsbereich (42) des wenigstens einen zweiten Roboters (22) angeordnet ist, in welcher die Produktportionen (46) erstellt werden.

8. Verfahren zum Erstellen von Portionen (46) aus mittels eines Produktförderers (16) geförderten Produkten (14), insbesondere Lebensmittelprodukten, mittels einer Vorrichtung gemäß einem der vorherigen Ansprüche, bei welchem
die geförderten Produkte (14) mittels eines ersten Roboters (20) gemäß einem Sortierkriterium sortiert werden, und
sortierte Produkte (14) mittels wenigstens eines zweiten Roboters (22) von dem Produktförderer (16) aufgenommen und an einem Ablageort abgelegt werden, um eine ein Zielkriterium erfüllende Produktportion (46) an dem Ablageort zu erstellen,
**dadurch gekennzeichnet, dass**
mittels des ersten Roboters (20) die von der ersten Fördereinrichtung (18) des Produktförderers (16) geforderten Produkte (14) in Abhängigkeit von dem Sortierkriterium auf die zweite Fördereinrichtung (19) des Produktförderers (16), die sich in Förderrichtung (F) parallel zu der ersten Fördereinrichtung (18) wie diese durch die Arbeitsbereiche (40, 42, 44) der Roboter (20, 22, 24) erstreckt, umzusetzen oder auf der ersten Fördereinrichtung (18) zu belassen.

## Claims

1. An apparatus for preparing portions (46) from products (14), in particular food products, conveyed by means of a product conveyor (16), comprising a plurality of robots (20, 22, 24) which each define a working region (40, 42, 44),
wherein a first robot (20) serves to sort the conveyed products (14) in accordance with a sorting criterion and
at least one second robot (22) serves to pick up sorted products (14) from the product conveyor (16) and to place them down at a placement location in order to prepare a product portion (46) satisfying a target criterion at the placement location. **characterized in that**
the product conveyor (16) includes a first and at least one second conveying device (18, 19) which extend parallel to one another in the conveying direction (F) through the working regions (40, 42, 44) of the robots (20, 22, 24), wherein
the first robot (20) serves to transfer the products (14) conveyed by the first conveying device (18) onto the second conveying device (19) or to leave them on the first conveying device (18) in dependence on the sorting criterion.

2. An apparatus in accordance with claim 1,
**characterized in that**
the second robot (22) follows the first robot (20) viewed in the conveying direction (F) or a plurality of second robots (22, 24) follow the first robot (20) one after the other viewed in the conveying direction (F).

3. An apparatus in accordance with claim 1 or claim 2,
**characterized in that**
the first robot (20) is made to sort the products (14) such that the second conveying device (19) conveys approximately just as many products (14) per time unit as the first conveying device (18) after the sorting.

4. An apparatus in accordance with any one of the preceding claims,
**characterized in that**
the at least one second robot (22) is made to pick up the sorted products (14) from the first conveying device (18) or from the second conveying device (19) in dependence on the target criterion.

5. An apparatus in accordance with at least one of the preceding claims,
**characterized in that**
the sorting criterion includes the falling below or exceeding of a predetermined product weight, e.g. of a mean product weight.

6. An apparatus in accordance with at least one of the preceding claims,
**characterized in that**
the target criterion includes a predetermined desired weight of the product portion (46) to be prepared.

7. An apparatus in accordance with at least one of the preceding claims,
**characterized in that**
a packaging machine (12) is arranged in the working region (42) of the at least one second robot (22) and the product portions (46) are prepared in it.

8. A method of preparing portions (46) of products (14), in particular food products, conveyed by means of a product conveyor (16), by means of an apparatus in accordance with any one of the preceding claims, in which
the conveyed products (14) are sorted by means of a first robot (20) in accordance with a sorting criterion; and
sorted products (14) are picked up from the product conveyor (16) by means of at least one second robot (22) and are placed down at a placement location in order to prepare a product portion (46) satisfying a target criterion at the placement location,
**characterized in that**
the products (14) conveyed by the first conveying device (18) of the product conveyor (16) are transferred by means of the first robot (20) in dependence on the sorting criterion to the second conveying device (19) of the product conveyor (16) which extends, as does the first conveying device, in the conveying direction (F), in parallel to the first conveying device (18), through the working regions (40, 42, 44) of the robots (20, 22, 24), or are left on the first conveying device (18).

## Revendications

1. Dispositif pour réaliser des portions (46) à partir de produits (14) convoyés au moyen d'un convoyeur à produits (16), en particulier de produits alimentaires, comprenant plusieurs robots (20, 22, 24) qui définissent chacun une zone de travail (40, 42, 44), dans lesquels un premier robot (20) sert à trier les produits convoyés (14) selon un critère de tri, et au moins un second robot (22) sert à reprendre des produits triés (14) depuis le convoyeur à produits (16) et à les déposer en un lieu de déposition, afin de réaliser au lieu de déposition une portion de produit (46) qui satisfait un critère cible,
**caractérisé en ce que**
le convoyeur à produits (16) comprend un premier et au moins un second moyen de convoyage (18, 19) qui s'étendent en direction de convoyage (R) parallèlement l'un à l'autre à travers les zones de travail (40, 42, 44) des robots (20, 22, 24), dans lequel
le premier robot (20) sert, en fonction du critère de tri, soit à transférer les produits convoyés (14) convoyés par le premier moyen de convoyage (18) vers le second moyen de convoyage (19), soit à les laisser sur le premier moyen de convoyage (18).

2. Dispositif selon la revendication 1,
**caractérisé en ce que** le second robot (22) suit le premier robot (20), vu en direction de convoyage (F), ou respectivement plusieurs seconds robots (22, 24) suivent les uns après les autres le premier robot (20), vus en direction de convoyage (R).

3. Dispositif selon la revendication 1 ou 2,
**caractérisé en ce que** le premier robot (20) est réalisé pour trier les produits (14) de telle façon que le second moyen de convoyage (19) convoie, après le tri, environ la même quantité de produits (14) par unité de temps que le premier moyen de convoyage (18).

4. Dispositif selon l'une des revendications précédentes,
**caractérisé en ce que** ledit au moins un second robot (22) est réalisé pour recevoir les produits triés (14) en fonction du critère cible soit depuis le premier moyen de convoyage (18) soit depuis le second moyen de convoyage (19).

5. Dispositif selon l'une au moins des revendications précédentes,
**caractérisé en ce que** le critère de tri inclut le passage au-dessus ou au-dessous d'un poids prédéterminé du produit, par exemple d'un poids moyen du produit.

6. Dispositif selon l'une au moins des revendications précédentes,
**caractérisé en ce que** le critère cible inclut un poids de consigne prédéterminé de la portion de produit (46) à réaliser.

7. Dispositif selon l'une au moins des revendications précédentes,
**caractérisé en ce qu'**une machine d'emballage (12) est agencée dans la zone de travail (42) dudit au moins un second robot (22), dans laquelle sont réalisées les portions de produits (46).

8. Procédé pour réaliser des portions (46) à partir de produits (14) convoyés au moyen d'un convoyeur à produits (16), en particulier de produits alimentaires, au moyen d'un dispositif selon l'une des revendications précédentes, dans lequel
les produits convoyés (14) sont triés au moyen d'un premier robot (20) selon un critère de tri, et
les produits triés sont repris depuis le convoyeur à produits (16) au moyen d'au moins un second robot (22) et sont déposés en un lieu de déposition, afin de réaliser au lieu de déposition une portion de produit (46) qui satisfait un critère cible,
**caractérisé en ce que**
au moyen du premier robot (20), les produits (14) convoyés par le premier moyen de convoyage (18) du convoyeur à produits (16) sont, en fonction du critère de tri, soit transférés vers le second moyen de convoyage (19) du convoyeur à produits (16) qui s'étend en direction de convoyage (R) parallèlement au premier moyen de convoyage (18) en traversant comme celui-ci les zones de travail (40, 42, 44) des robots (20, 22, 24), soit laissés sur le premier moyen de convoyage (18).
